# EUROPEAN PATENT APPLICATION

(11) **EP 4 539 282 A1**
(43) Date of publication of application: **16.04.2025**
(21) Application number: 23819695.0
(22) Date of filing: 29.05.2023
(51) Int. Cl.: H02H 3/08, H02H 3/087, H02H 7/18, H01H 39/00

(54) **DC SHORT-CIRCUIT PROTECTION DEVICE**

(30) Priority: 07.06.2022 JP 2022092473
(71) Applicant: Panasonic Intellectual Property Management Co., Ltd., Kadoma-shi, Osaka 571-0057 (JP)
(72) Inventor: IWAKI, Hideki, Kadoma-shi, Osaka 571-0057 (JP); SADAYUKI, Eiichi, Kadoma-shi, Osaka 571-0057 (JP); FURUSE, Tomoaki, Kadoma-shi, Osaka 571-0057 (JP)
(74) Representative: Novagraaf International SA
(86) International application number: PCT/JP2023/019837
(87) International publication number: WO 2023/238713

(57) **Abstract**

A fuse that includes a bus bar and cuts off the bus bar in response to an ignition signal, a first current detector that includes a first resistor and detects a current flowing through the bus bar, and a second current detector that includes a second resistor and detects the current flowing through the bus bar are included, wherein the first resistor and the second resistor are integrated with the bus bar, and a current having the same magnitude as the current flowing through the bus bar flows in the first resistor and the second resistor, and the bus bar is cut off between the first current detector and the second current detector in response to the ignition signal, or the first resistor of the first current detector is cut off in response to the ignition signal.

## Description

### TECHNICAL FIELD

The present disclosure relates to a direct current short circuit protection device.

### BACKGROUND ART

PTL 1 describes a technology for downsizing an electric circuit breaker device by integrating a sensor for current detection with the electric circuit breaker device.

### Citation List

### Patent Literature

PTL 1: Unexamined Japanese Patent Publication No. 2020-136055

### SUMMARY OF THE INVENTION

However, when a sensor including a shunt resistor or the like is incorporated in the electric circuit breaker device described in PTL 1, there is a problem that heat generation in the shunt resistor is large when a current flows through the shunt resistor, and heat dissipation is difficult. In particular, when an active type fuse is mounted on a vehicle such as an electric automobile, it is necessary to conduct a large current, and accordingly, heat generation is large, and measures for heat dissipation are required.

The present disclosure provides a direct current short circuit protection device that can easily dissipate heat.

A direct current short circuit protection device according to one aspect of the present disclosure includes a fuse that includes a bus bar and cuts off the bus bar in response to an ignition signal, a first current detector that includes a first resistor and detects a current flowing through the bus bar, and a second current detector that includes a second resistor and detects the current flowing through the bus bar, wherein the first resistor and the second resistor are integrated with the bus bar, and a current having a same magnitude as the current flowing through the bus bar flows in the first resistor and the second resistor, and the bus bar is cut off between the first current detector and the second current detector in response to the ignition signal, or the first resistor of the first current detector is cut off in response to the ignition signal.

The direct current short circuit protection device according to one aspect of the present disclosure can easily dissipate heat.

### BRIEF DESCRIPTION OF THE DRAWINGS

Fig. 1 is a block diagram illustrating an example of a direct current short circuit protection device according to an exemplary embodiment.
Fig. 2 is a perspective view of an active type fuse in a first example.
Fig. 3 is a partial sectional view of the active type fuse in the first example.
Fig. 4 is a perspective view of an active type fuse in a second example.
Fig. 5 is a partial sectional view of an active type fuse in a third example.
Fig. 6 is a partial sectional view of an active type fuse in a fourth example.
Fig. 7 is a bottom view of a bus bar in the fourth example.
Fig. 8 is a view for describing a sectional structure of the bus bar in the fourth example.
Fig. 9 is a top view of a bus bar in a fifth example.

### DESCRIPTION OF EMBODIMENT

Hereinafter, an exemplary embodiment is specifically described with reference to the drawings.

The exemplary embodiments described below illustrate comprehensive or specific examples. Numerical values, shapes, materials, constituent elements, disposition positions and connection forms of the constituent elements, and the like described in the following exemplary embodiments are illustrative, and are not intended to limit the scope of the present disclosure.

### (Exemplary embodiment)

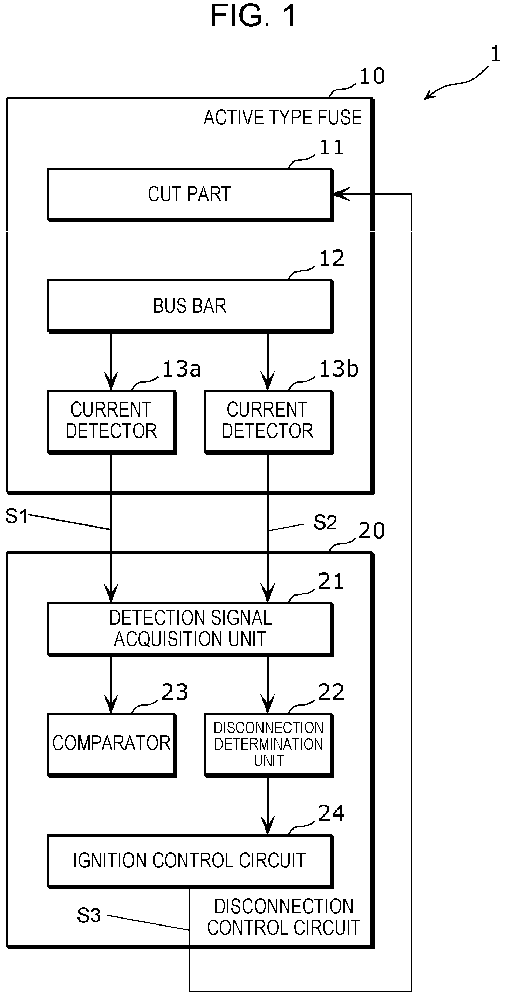

Direct current short circuit protection device 1 according to an exemplary embodiment will be described with reference to Fig. 1.

Fig. 1 is a block diagram illustrating an example of direct current short circuit protection device 1 according to an exemplary embodiment.

Direct current short circuit protection device 1 is mounted on, for example, a vehicle such as an electric automobile that uses electric power for propulsion drive. A high-voltage battery is mounted on the vehicle such as an electric automobile, and electric power is supplied from the battery to a load such as a motor to propel and drive the vehicle such as the electric automobile. When an accident or the like has occurred, a large current due to a short circuit anomaly may flow in a path connecting the battery and the load, and the battery may smoke or fire. Thus, direct current short circuit protection device 1 is provided to disconnect the path.

Direct current short circuit protection device 1 includes active type fuse 10 and disconnection control circuit 20.

Active type fuse 10 is a device for cutting a path connecting the battery and the load when a large current due to a short circuit anomaly flows in the path, and is, for example, a pyrofuse. The pyrofuse incorporates gunpowder therein, and when the gunpowder is ignited based on a control signal from the outside, a bus bar is irreversibly cut by an explosive force due to ignition of the gunpowder, which disconnects the current. Active type fuse 10 includes cutter 11, bus bar 12, and a plurality of current detectors. Here, two current detectors 13a and 13b are illustrated as the plurality of current detectors, but the plurality of current detectors may be three or more. When the number of current detectors is large, it is necessary to process the detection signal of each current detector, and the processing load increases. Thus, in the present specification, an example in which the plurality of current detectors is not four or more but two or three will be described.

Bus bar 12 is an elongated conductor rod that is connected (for example, fastened) to the path connecting the battery and the load and becomes a part of the path. Cutter 11 cuts off bus bar 12 based on an ignition signal from disconnection control circuit 20. Since bus bar 12 is a part of the path, the path can be disconnected by cutting bus bar 12.

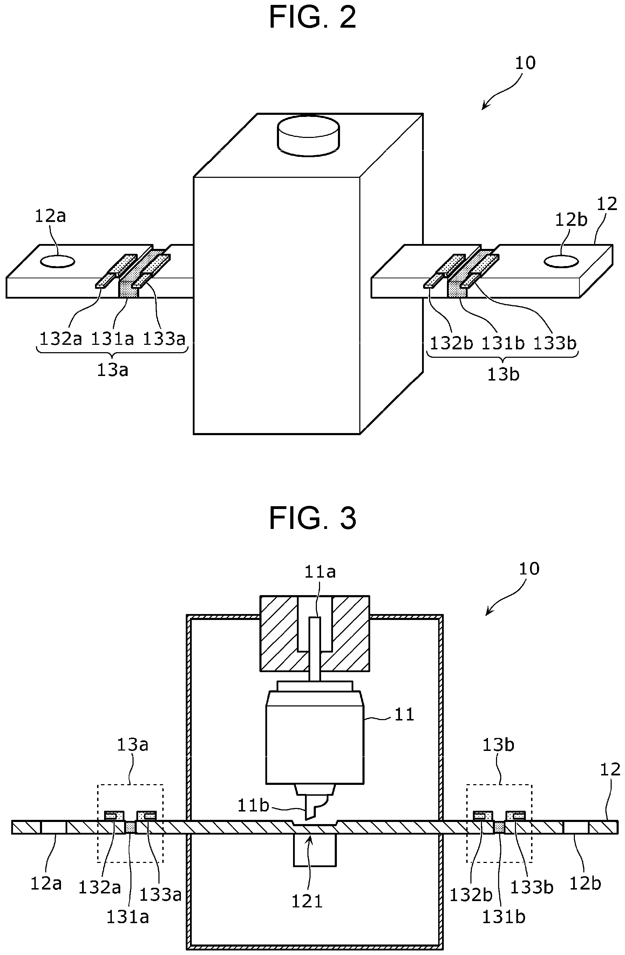

Fig. 2 is a perspective view of an example of active type fuse 10. As illustrated in Fig. 2, current detector 13a includes resistor 131a, and current detector 13b includes resistor 131b. Each of current detector 13a and current detector 13b is a current sensor that detects the current flowing through bus bar 12. Resistors 131a and 131b are integrated with bus bar 12 so that a current having the same magnitude as the current flowing through bus bar 12 flows. An example of the integration will be described later. Current detectors 13a and 13b detect the current flowing through bus bar 12 by converting the current flowing through resistors 131a and 131b into voltage. The plurality of current detectors are dispersedly disposed on one end side and the other end side in a longitudinal direction of bus bar 12. An example of the distributed disposition will be described later.

Disconnection control circuit 20 is connected to active type fuse 10 and controls active type fuse 10 to cut bus bar 12. Specifically, disconnection control circuit 20 outputs ignition signal S3 to active type fuse 10 based on detection signal S1 output from current detector 13a and detection signal S2 output from current detector 13b. When ignition signal S3 is input, cutter 11 cuts off bus bar 12. Disconnection control circuit 20 is realized by, for example, a micro controller unit (MCU) or the like. Disconnection control circuit 20 includes detection signal acquisition unit 21, disconnection determination unit 22, comparator 23, and ignition control circuit 24.

Detection signal acquisition unit 21 acquires detection signal S1 output from current detector 13a and detection signal S2 output from current detector 13b. For example, detection signal S1 is a signal indicating a voltage generated when a current flows through resistor 131a included in current detector 13a, and detection signal S2 is a signal indicating a voltage generated when a current flows through resistor 131b included in current detector 13b.

Disconnection determination unit 22 determines whether to disconnect the path connecting the battery and the load based on detection signals S1 and S2 output from current detectors 13a and 13b. For example, disconnection determination unit 22 first calculates the value of the current flowing through bus bar 12 by dividing the sum of the voltage indicated by detection signal S1 output from current detector 13a and the voltage indicated by detection signal S2 output from current detector 13b by the sum of the resistance value of resistor 131a and the resistance value of resistor 131b. Next, when the calculated value of the current flowing through bus bar 12 is larger than or equal to a predetermined value, that is, when a large current is flowing through bus bar 12, the determination unit determines disconnection of the path.

Comparator 23 compares the current value calculated based on detection signal S1 with the current value calculated based on detection signal S2. Specifically, comparator 23 calculates a plurality of current values by dividing the voltage indicated by detection signal S1 by the resistance value of resistor 131a and further dividing the voltage indicated by detection signal S2 by the resistance value of resistor 131b. Comparator 23 performs failure detection on current detectors 13a and 13b based on the comparison result of the plurality of current values. When the plurality of current values are different, it is determined that any one of current detector 13a and current detector 13b has failed. For example, when any of the plurality of current detectors has failed, disconnection control circuit 20 may notify an external device of the failure.

Ignition control circuit 24 outputs ignition signal S3 to active type fuse 10 when disconnection of the path connecting the battery and the load is determined. With this configuration, when a large current due to a short-circuit anomaly flows in the path, active type fuse 10 cuts off bus bar 12, and the path can be cut off.

There are various forms of direct current short circuit protection device 1, and first to fifth examples will be described below.

### (First example)

First, a first example of direct current short circuit protection device 1 will be described with reference to Figs. 2 and 3.

Fig. 2 is a perspective view of active type fuse 10 in the first example.

Fig. 3 is a partial sectional view of active type fuse 10 in the first example. In Fig. 3, illustration of a section of cutter 11 is omitted.

Cutter 11 includes, for example, ignition terminal 11a and cutting blade 11b. Ignition terminal 11a is connected to ignition control circuit 24 of disconnection control circuit 20. When ignition signal S3 (see Fig. 1) is output from ignition control circuit 24 to ignition terminal 11a, cutter 11 instantaneously pushes down cutting blade 11b downward to cut bus bar 12.

For example, bus bar 12 is provided with fastener part 12a at one end in the longitudinal direction of bus bar 12, and is provided with fastener part 12b at the other end in the longitudinal direction of bus bar 12. Bus bar 12 is inserted in the middle of the path connecting the battery and the load, and fastener parts 12a and 12b are fastened to the path with screws or the like. Bus bar 12 thus becomes a part of the path. Cut portion 121 of bus bar 12 is a portion cut by cutting blade 11b of cutter 11 when ignition signal S3 is output from disconnection control circuit 20.

In the first example, the plurality of current detectors are dispersedly disposed on one end side (for example, fastener part 12a side) and the other end side (for example, fastener part 12b side) in the longitudinal direction of bus bar 12 with respect to cut portion 121 of bus bar 12 cut by active type fuse 10. In the first example, the number of the plurality of current detectors is two, one current detector 13a of the two current detectors is disposed on one end side in the longitudinal direction of bus bar 12 with respect to cut portion 121, and the other current detector 13b is disposed on the other end side in the longitudinal direction of bus bar 12 with respect to cut portion 121.

Current detector 13a includes resistor 131a, and current detector 13b includes resistor 131b. For example, the resistance value of resistor 131a and the resistance value of resistor 131b are the same. Each of resistors 131a and 131b is a resistance element (shunt resistor) of about several 10 microhms. As illustrated in Figs. 2 and 3, resistors 131a and 131b are integrated with bus bar 12 by being inserted into bus bar 12. In a fourth example and a fifth example to be described later, an example will be described in which resistors 131a and 131b are not resistance elements but parts of bus bar 12, and are integrated with bus bar 12 as parts of bus bar 12. In resistors 131a and 131b integrated with bus bar 12, the current flowing through bus bar 12 is converted into a voltage, whereby the current flowing through bus bar 12 can be detected.

For example, each of the plurality of current detectors has two current monitoring terminals for monitoring the current flowing through the resistor. In the first example, current detector 13a includes current monitoring terminals 132a and 133a for monitoring the current flowing through resistor 131a, and current monitoring terminals 132a and 133a are provided on bus bar 12 such that resistor 131a is positioned between current monitoring terminals 132a and 133a. Current detector 13b includes current monitoring terminals 132b and 133b for monitoring the current flowing through resistor 131b, and current monitoring terminals 132b and 133b are provided on bus bar 12 such that resistor 131b is positioned between current monitoring terminals 132b and 133b. For example, the distance between current monitoring terminals 132a and 133a and the distance between current monitoring terminals 132b and 133b are substantially the same.

Current monitoring terminals 132a, 133a, 132b, and 133b are connected to detection signal acquisition unit 21 of disconnection control circuit 20. Detection signal acquisition unit 21 acquires, as detection signals, a voltage between current monitoring terminals 132a and 133a, that is, a voltage generated in resistor 131a when a current flows through resistor 131a, and a voltage between current monitoring terminals 132b and 133b, that is, a voltage generated in resistor 131b when a current flows through resistor 131b.

Although the first example shows an example in which the plurality of current detectors are provided outside a housing of active type fuse 10, at least one of the plurality of current detectors may be provided inside the housing of active type fuse 10.

Cutter 11 may include a plurality of cutting blades, and bus bar 12 may be cut at a plurality of positions when ignition signal S3 is output from disconnection control circuit 20.

As described above, direct current short circuit protection device 1 includes active type fuse 10 that has bus bar 12 and cuts off bus bar 12 in response to ignition signal S3 (see Fig. 1), current detector 13a that has resistor 131a and detects the current flowing through bus bar 12, and current detector 13b that has resistor 131b and detects the current flowing through bus bar 12. Resistors 131a and 131 are integrated with bus bar 12 so that the current having the same magnitude as the current flowing through bus bar 12 flows, and are cut off between current detector 13a and current detector 13b. That is, current detector 13a and current detector 13b are dispersedly provided in the bus bar.

For example, when a plurality of current detectors are not dispersedly disposed but one current detector is disposed, a resistor having a resistance value of a certain degree is needed to detect the current, and heat generation is concentrated on the resistor of one current detector, making it difficult to dissipate heat. On the other hand, when a plurality of current detectors are dispersedly disposed, since the resistance value per resistor can be reduced, the heat generation of each resistor can be reduced, and the concentration of heat generation can be alleviated. Thus, in direct current short circuit protection device 1 in which a plurality of current detectors are dispersedly disposed, heat dissipation can be easily performed.

For example, it is preferable that the plurality of current detectors are dispersedly disposed on one end side and the other end side in the longitudinal direction of bus bar 12 with respect to cut portion 121 of bus bar 12 cut by active type fuse 10. For example, the number of the plurality of current detectors is two, one current detector 13a of the two current detectors may be disposed on one end side in the longitudinal direction of bus bar 12 with respect to cut portion 121, and the other current detector 13b may be disposed on the other end side in the longitudinal direction of bus bar 12 with respect to cut portion 121.

For example when the number of current detectors is large, it is necessary to process each detection signal of the plurality of current detectors, and the processing load increases. On the other hand, when the number of the plurality of current detectors is two, and the two current detectors are dispersedly disposed, heat dissipation can be easily performed while the processing load is reduced.

For example, direct current short circuit protection device 1 may further include disconnection control circuit 20 that outputs ignition signal S3 to active type fuse 10 based on detection signals output from the plurality of current detectors.

In this manner, disconnection control circuit 20 may be provided in direct current short circuit protection device 1.

For example, each of the plurality of current detectors may have a current monitoring terminal for monitoring the current flowing through the resistor.

In this manner, the current monitoring terminal may be provided in the current detector.

For example, direct current short circuit protection device 1 may further include comparator 23 that compares a plurality of current values based on detection signals output from the plurality of current detectors, and comparator 23 may perform failure detection of the plurality of current detectors based on the comparison result between the plurality of current values.

With this configuration, since the currents of the same magnitude flow through the resistors included in the plurality of current detectors, the plurality of current values based on the detection signals output from the plurality of current detectors should be the same, but when any of the plurality of current detectors has failed, the current values may be different. For example, when there are two current detectors, and two current values are different, it is difficult to identify which of the two current detectors has failed, but it is possible to detect that any one of the two current detectors has failed.

### (Second example)

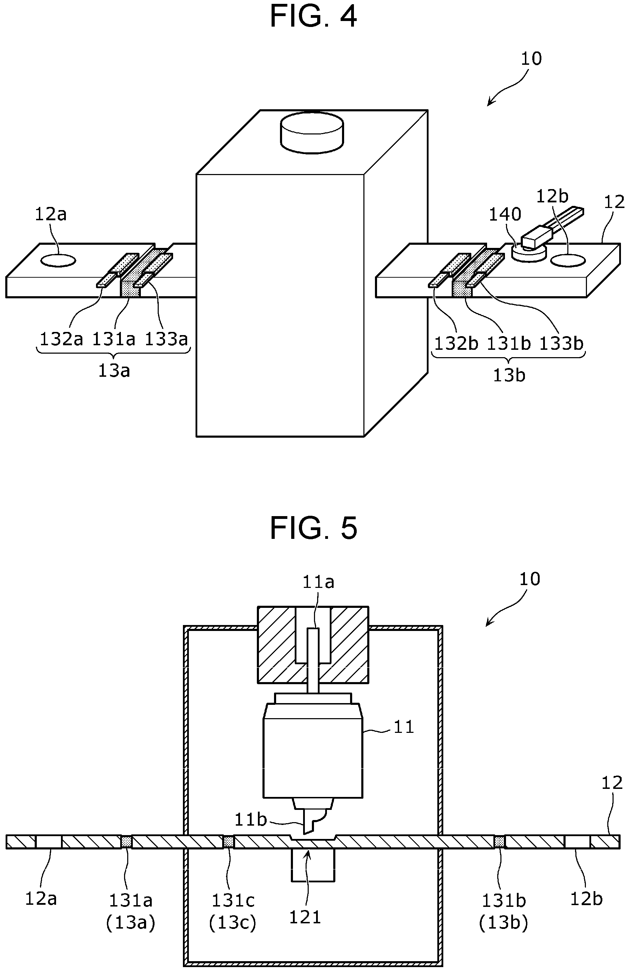

Next, a second example of direct current short circuit protection device 1 will be described with reference to Fig. 4.

Fig. 4 is a perspective view of active type fuse 10 in the second example.

In the second example, bus bar 12 is provided with temperature monitoring terminal 140 for monitoring the temperature of bus bar 12. The other points are the same as those of the first example, and thus the description thereof will be omitted.

A thermistor, a thermocouple, or the like is connected to temperature monitoring terminal 140, and the temperature of bus bar 12 is monitored. The temperature of bus bar 12 is acquired by disconnection control circuit 20 and used for calculating the current value of the current flowing through bus bar 12 in disconnection determination unit 22.

The resistance value of the resistor included in each of the plurality of current detectors changes depending on the temperature, and the voltage generated in the resistor changes accordingly. Thus, the calculation result of the current flowing through bus bar 12 changes depending on the temperature. Therefore, the temperature of bus bar 12 in which the resistor is integrated is monitored, and the detection signals of the plurality of current detectors or the calculated current values are corrected according to the temperature of bus bar 12, whereby the current flowing through bus bar 12 can be accurately detected.

### (Third example)

Next, a third example of direct current short circuit protection device 1 will be described with reference to Fig. 5.

Fig. 5 is a partial sectional view of active type fuse 10 in the third example. In Fig. 5, illustration of a section of cutter 11 is omitted. In Fig. 5, illustration of the current monitoring terminal is omitted.

In the third example, the number of the plurality of current detectors is three, two current detectors 13a and 13c (resistors 131a and 131c) of the three current detectors 13a to 13c are disposed on one end side in the longitudinal direction of bus bar 12 with respect to cut portion 121, and the remaining one current detector 13b (resistor 131b) of the three current detectors 13a to 13c is disposed on the other end side in the longitudinal direction of bus bar 12 with respect to cut portion 121. The other points are the same as those of the first example, and thus the description thereof will be omitted.

In the third example, the number of the plurality of current detectors is three, and thus, a failed current detector among the plurality of current detectors can be specified. Specifically, when the current value based on the detection signal output from one of three current detectors 13a to 13c is different from the two current values based on the detection signals output from the other two current detectors, it is possible to detect that the one current detector has failed.

Fig. 5 illustrates an example in which current detector 13c is provided in the housing of active type fuse 10, but two or more current detectors among the three current detectors 13a to 13c may be provided in the housing of active type fuse 10, or all the three current detectors 13a to 13c may be provided outside the housing of active type fuse 10.

Also in the third example, bus bar 12 may be provided with temperature monitoring terminal 140.

### (Fourth example)

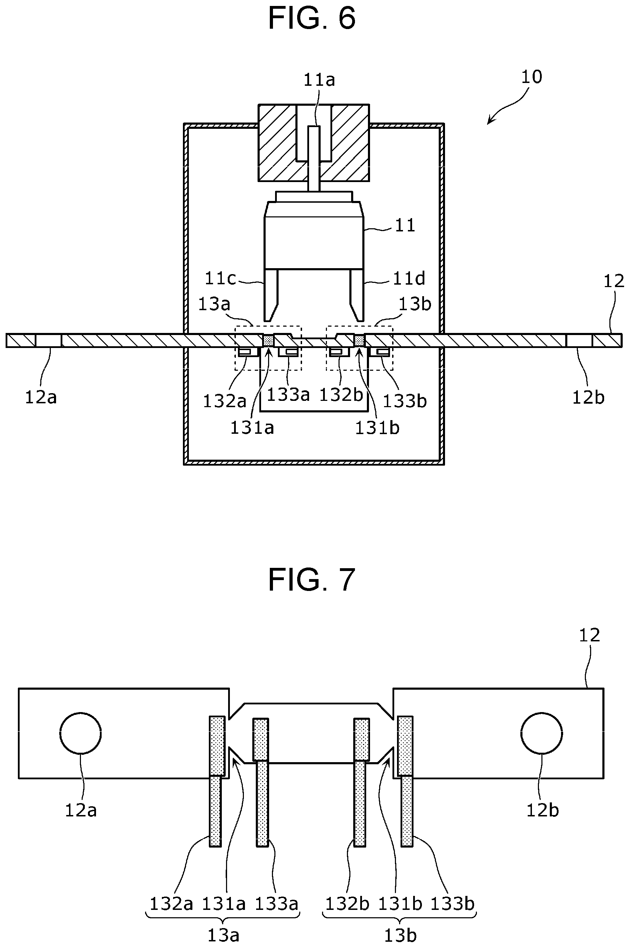

Next, a fourth example of direct current short circuit protection device 1 will be described with reference to Figs. 6 to 8.

Fig. 6 is a partial sectional view of active type fuse 10 in the fourth example. In Fig. 6, illustration of a section of cutter 11 is omitted.

Fig. 7 is a bottom view of bus bar 12 in the fourth example.

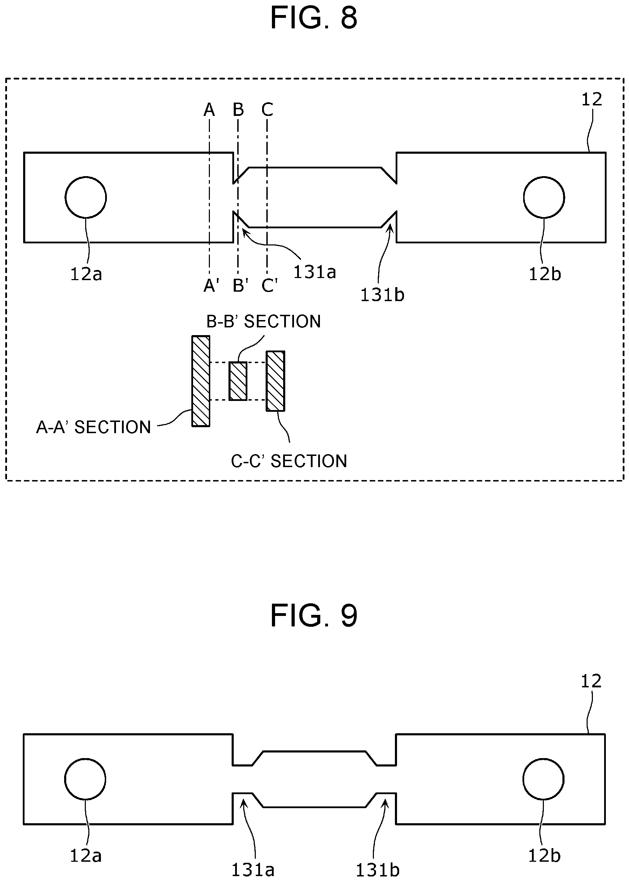

Fig. 8 is a view for describing a sectional structure of bus bar 12 in the fourth example. In Fig. 8, illustration of the current monitoring terminal is omitted.

In the fourth example, the resistor (in the fourth example, resistors 131a and 131b of two current detectors) of each of the plurality of current detectors is a part of bus bar 12, and a part where the resistance value is increased by narrowing or thinning a part of bus bar 12 is used as the resistor. Specifically, the area of a section orthogonal to the direction in which the current flows in the resistor of bus bar 12 is smaller than the area of a section orthogonal to the direction in which the current flows in the portion other than the resistor of bus bar 12. As illustrated in Figs. 7 and 8, it can be seen that the area of a section of resistor 131a (area of B-B' section in Fig. 8) is smaller than the area of a section of a portion other than resistors 131a and 131b (for example, area of A-A' section and area of C-C' section in Fig. 8). A current monitoring terminal is connected to both ends of the portion with a reduced sectional area so that a voltage generated by a current flowing through the portion can be acquired via the current monitoring terminal, whereby the portion can be used as a current detector.

In addition, in the fourth example, active type fuse 10 cuts bus bar 12 at two positions of one end side and the other end side in the longitudinal direction of bus bar 12. For example, cutter 11 of active type fuse 10 has two cutting blades 11c and 11d. When ignition signal S3 is output from ignition control circuit 24 to ignition terminal 11a, cutter 11 instantaneously pushes down cutting blades 11c and 11d downward in Fig. 6 to cut bus bar 12. Resistor 131a included in one current detector 13a of the plurality of current detectors is a cut portion on one end side in the longitudinal direction of bus bar 12 to be cut by active type fuse 10, and the resistor 131b included in another one current detector 13b of the plurality of current detectors is a cut portion on the other end side in the longitudinal direction of bus bar 12 to be cut by active type fuse 10. That is, resistor 131a is a cut portion on one end side in the longitudinal direction of bus bar 12 to be cut by cutting blade 11c of cutter 11 when ignition signal S3 is output from disconnection control circuit 20, and resistor 131b is a cut portion on the other end side in the longitudinal direction of bus bar 12 to be cut by cutting blade 11d of cutter 11 when ignition signal S3 is output from disconnection control circuit 20.

A cut portion of bus bar 12 to be cut by active type fuse 10 has a smaller sectional area than other portions of bus bar 12 to facilitate cutting (for example, constricted). Thus, the cut portion in bus bar 12 has a higher resistance value than other portions of bus bar 12. Therefore, the cut portion can be used as a resistor for detecting the current flowing through bus bar 12, and the structure of direct current short circuit protection device 1 can be simplified and the cost can be reduced as compared with a case where a resistor for detecting the current flowing through bus bar 12 is separately prepared.

When the cut portion of bus bar 12 is treated as a resistor, the resistance value varies depending on dimensional tolerance or the like due to machining accuracy of the cut portion. For this reason, the calibration value for each individual may be stored in a flash memory or the like of disconnection control circuit 20, and the current value may be corrected for each individual using the calibration value.

In the fourth example, the number of the plurality of current detectors may be three or more. The plurality of current detectors may include a current detector in which the resistor is a part of bus bar 12 and a current detector in which the resistor is a resistance element.

In the fourth example, an example in which the cut portion in bus bar 12 is utilized as the resistor of the current detector is illustrated, but a portion that is not the cut portion but has a reduced sectional area may be utilized as the resistor of the current detector.

Also in the fourth example, bus bar 12 may be provided with temperature monitoring terminal 140.

### (Fifth example)

Next, a fifth example of direct current short circuit protection device 1 will be described with reference to Fig. 9.

Fig. 9 is a top view of bus bar 12 in the fifth example. In Fig. 9, illustration of the current monitoring terminal is omitted.

In the fifth example, the shape of the resistor (cut portion) in the bus bar is different from that in the fourth example. The other points are the same as those of the fourth example, and thus the description thereof will be omitted.

When the cut portion of bus bar 12 is treated as a resistor, the resistance value of the resistor varies depending on the dimensional tolerance of the cut portion or the like. However, as illustrated in Fig. 9, the resistor (cut portion) is formed so that a sectional shape is constant by about several millimeters along the direction in which the current flows, whereby the current can be stably detected even through there is a variation in the resistance value due to machining accuracy.

### (Other exemplary embodiments)

The exemplary embodiments have been described as examples of the technology according to the present disclosure. However, the technology according to the present disclosure is not limited to these, and can also be applied to exemplary embodiments in which changes, replacements, additions, omissions, and the like are made as appropriate. For example, the following modifications are also included in one exemplary embodiment of the present disclosure.

For example, in the above exemplary embodiment, an example has been described in which direct current short circuit protection device 1 (specifically, disconnection control circuit 20) includes comparator 23. However, direct current short circuit protection device 1 may include no comparator 23.

For example, in the above exemplary embodiment, an example in which direct current short circuit protection device 1 includes disconnection control circuit 20 has been described, but disconnection control circuit 20 does not have to be included in direct current short circuit protection device 1. That is, disconnection control circuit 20 may be provided separately from direct current short circuit protection device 1.

For example, in the above exemplary embodiment, each of the plurality of current detectors has the current monitoring terminal. However, the current monitoring terminal does not have to be a component of the current detector.

The scope of the present disclosure should include modifications that those skilled in the art can obtain by adding various design changes to the exemplary embodiments described above, as well as modifications implemented by freely combining components and functions described in the exemplary embodiments without deviating from the gist of the present disclosure.

### (Conclusions)

Direct current short circuit protection device 1 according to a first aspect of the present disclosure includes active type fuse 10 that has bus bar 12 and cuts off bus bar 12 in response to ignition signal S3, current detector 13a that has resistor 131a and detects the current flowing through bus bar 12, and current detector 13b that has resistor 131b and detects the current flowing through bus bar 12. Resistor 131a and resistor 131b are integrated with bus bar 12 so that the current having the same magnitude as the current flowing through bus bar 12 flows, and bus bar 12 is cut off between current detector 13a and current detector 13b, or resistor 131a of current detector 13a is cut off in response to ignition signal S3.

With this configuration, the plurality of current detectors are provided in bus bar 12. Thus, the resistance value per resistor can be reduced, and heat dissipation can be easily performed.

In direct current short circuit protection device 1 according to a second aspect of the present disclosure, resistor 131a and resistor 131b are parts of the bus bar 12, a direction in which a current flowing through resistor 131a and bus bar 12 is defined as a first direction (in the present exemplary embodiment, right-left direction), and an area of a section of resistor 131a orthogonal to the first direction (for example, area of B-B' section in Fig. 8) and an area of a section of resistor 131b orthogonal to the first direction (for example, area of D-D' section in Fig. 8) are smaller than an area of a section in a portion other than resistor 131a and resistor 131b in bus bar 12 orthogonal to the first direction (for example, are of A-A' section in Fig. 8).

With this configuration, the current monitoring terminal is connected to both ends of the portion with a reduced sectional area, and the voltage generated by the current flowing through the portion can be acquired via the current monitoring terminal. Thus, the portion can be utilized as a current detector.

In direct current short circuit protection device 1 according to a third aspect of the present disclosure, bus bar 12 includes cut portion 121 to be cut by active type fuse 10, current detector 13a is positioned between one end of bus bar 12 and cut portion 121, and current detector 13b is positioned between the other end of bus bar 12 and cut portion 121.

With this configuration, by dispersedly disposing the two current detectors, heat dissipation can be easily performed while reducing the processing load.

In direct current short circuit protection device 1 according to a fourth aspect of the present disclosure, current detector 13c is further included, and current detector 13c is positioned between one end of bus bar 12 and cut portion 121.

With this configuration, when the current value based on the detection signal output from one of three current detectors 13a to 13c is different from the two current values based on the detection signals output from the other two current detectors, it is possible to detect that the one current detector has failed.

In direct current short circuit protection device 1 according to a fifth aspect of the present disclosure, active type fuse 10 cuts off resistor 131a of current detector 13a (or resistor 131b of current detector 13b) in response to ignition signal S3.

With this configuration, resistor 131a (or resistor 131b) can be utilized as cut portion 121.

Direct current short circuit protection device 1 according to a sixth aspect of the present disclosure further includes disconnection control circuit 20 that outputs ignition signal S3 to active type fuse 10 according to detection signal S1 output from current detector 13a and detection signal S2 output from current detector 13b.

With this configuration, bus bar 12 can be disconnected according to detection signals S1 and S2 output from current detectors 13a and 13b.

In direct current short circuit protection device 1 according to a seventh aspect of the present disclosure, current detector 13a includes current monitoring terminals 132a and 133a for monitoring the current flowing through resistor 131a, and current detector 13b includes second current monitoring terminals 132b and 133b for monitoring the current flowing through resistor 131b.

With this configuration, the voltages generated in resistor 131a and resistor 131b can be output from current detectors 13a and 13b as detection signals S1 and S2.

Direct current short circuit protection device 1 according to an eighth aspect of the present disclosure further includes temperature monitoring terminal 140 that is provided on bus bar 12 and monitors a temperature of bus bar 12.

With this configuration, the temperature of bus bar 12 can be monitored, and the temperature of bus bar 12 can be used for calculating the current value.

Direct current short circuit protection device 1 according to a ninth aspect of the present disclosure further includes comparator 23 that compares a first current value calculated based on detection signal S1 output from current detector 13a with a second current value calculated based on detection signal S2 output from current detector 13b.

With this configuration, when the first current value and the second current value are different from each other, it can be determined that either one of current detector 13a and current detector 13b has failed.

### INDUSTRIAL APPLICABILITY

The present disclosure can be applied to a device that disconnects a current flowing through a current path.

### REFERENCE MARKS IN THE DRAWINGS

1: direct current short circuit protection device
10: active type fuse
11: cutter
11a: ignition terminal
11b, 11c, 11d: cutting blade
12: bus bar
12a, 12b: fastener part
13a, 13b, 13c: current detector
20: disconnection control circuit
21: detection signal acquisition unit
22: disconnection determination unit
23: comparator
24: ignition control circuit
121: cut portion
131a, 131b, 131c: resistor
132a, 133a, 132b, 133b: current monitoring terminal
140: temperature monitoring terminal
S1, S2: detection signal
S3: ignition signal

## Claims

1. A direct current short circuit protection device comprising:
a fuse that includes a bus bar and cuts off the bus bar in response to an ignition signal;
a first current detector that includes a first resistor and detects a current flowing through the bus bar; and
a second current detector that includes a second resistor and detects the current flowing through the bus bar,
wherein
the first resistor and the second resistor are integrated with the bus bar, and a current having a same magnitude as the current flowing through the bus bar flows in the first resistor and the second resistor, and
the bus bar is cut off between the first current detector and the second current detector in response to the ignition signal, or the first resistor of the first current detector is cut off in response to the ignition signal.

2. The direct current short circuit protection device according to claim 1, wherein
the first resistor and the second resistor are parts of the bus bar,
a direction in which a current flowing through the first resistor, the second resistor, and the bus bar is defined as a first direction, and
an area of a section of the first resistor orthogonal to the first direction and an area of a section of the second resistor orthogonal to the first direction are smaller than an area of a section in a portion other than the first resistor and the second resistor in the bus bar orthogonal to the first direction.

3. The direct current short circuit protection device according to claim 1 or 2, wherein
the bus bar includes a cut portion to be cut by the fuse,
the first current detector is positioned between one end of the bus bar and the cut portion, and
the second current detector is positioned between an other end of the bus bar and the cut portion.

4. The direct current short circuit protection device according to claim 3, further comprising a third current detector,
wherein the third current detector is positioned between the one end of the bus bar and the cut portion.

5. The direct current short circuit protection device according to claim 2, wherein the fuse cuts off the first resistor of the first current detector in response to the ignition signal.

6. The direct current short circuit protection device according to any one of claims 1 to 5, further comprising a disconnection control circuit that outputs the ignition signal to the fuse in response to a signal output from the first current detector and a signal output from the second current detector.

7. The direct current short circuit protection device according to any one of claims 1 to 6, wherein
the first current detector includes a first current monitoring terminal for monitoring a current flowing through the first resistor, and
the second current detector includes a second current monitoring terminal for monitoring a current flowing through the second resistor.

8. The direct current short circuit protection device according to any one of claims 1 to 7, further comprising a temperature monitoring terminal that is provided on the bus bar and monitors a temperature of the bus bar.

9. The direct current short circuit protection device according to any one of claims 1 to 8, further comprising a comparator that compares a first current value calculated based on a first detection signal output from the first current detector with a second current value calculated based on a second signal output from the second current detector.
